# EUROPEAN PATENT SPECIFICATION

(11) **EP 1 857 898 B1**
(45) Date of publication and mention of the grant of the patent: **13.08.2008**
(21) Application number: 06425327.1
(22) Date of filing: 15.05.2006
(51) Int. Cl.: G05B 19/042, D03J 1/00, H04L 29/00

(54) **Data transmission system for connecting a yarn feeder device to a textile machine**
Datenübertragungssystem zum Verbinden einer Fadenliefervorrichtung mit einer Textilmaschine
Système de transmission de données pour brancher un dispositif d'alimentation de fil à une machine textile

(43) Date of publication of application: 21.11.2007
(73) Proprietor: L.G.L. Electronics S.p.A., 24024 Gandino (Bergamo) (IT)
(72) Inventor: Zenoni, Pietro, 24026 Leffe (BG) (IT); Gotti, Luca, 24021 Albino (BG) (IT)
(74) Representative: Spandonari, Carlo

(56) References cited:
- WO-A2-20/04003670
- US-A- 5 246 039
- US-A1- 2003 200 323
- US-A1- 2004 238 060
- US-A1- 2006 041 630

## Description

The present invention relates to a data transmission system for connecting a yarn-feeding apparatus to a general textile machine, such as a fluid-jet loom or a mechanical picking loom, a knitting machine, a warping machine, and the like.

In the weaving processes, a textile machine is conventionally connected to a yarn-feeding apparatus which usually comprises a plurality of yarn feeders which may differ from each other, e.g., in relation to the type of yarn, to the feeding method (positive or negative), etc.. The textile machine is provided with a control unit that communicates with respective control units, each of which is associated to a respective yarn feeder, via a digital, serial network, in order to control the feeder to release a required lenght of yarn.

WO 2003002800 describes a data transmission system for connecting a plurality of yarn feeders having respective peripheral units to the control unit of the textile machine. In the system described in WO 2003002800, the control unit of the textile machine communicates via a main bus with an interface having a plurality of connection ports, to which respective feeders may be connected. Further external devices are also connected to the textile machine via the main bus, such as devices for controlling the tension of the yarn, photoelectric weft detectors, and the like.

An active repeater housed within the interface bidirectionally repeats the informations exchanged between the main bus and a branched mirror bus, to which said ports are connected. The main bus and the mirror bus are the logic copy of each other. The repeater has the task of reducing the drawbacks deriving from the connection of a plurality of weft feeders to a single main bus. For example, the repeater eliminates the known problems of reflection and allows the main bus to be optoisolated from the mirror bus.

The position information from the textile machine, which is required to be in real time, is conveyed via a secondary bus, so that it is not affected by delays due to the traffic of data on the main bus. The secondary bus has a branched structure similar to the mirror bus, which allows the angular position information to be sent to the various ports.

In the system described in WO 200300800, each of the weft feeders is connected to the respective peripheral units via a local bus, and the control unit of the feeder acts as a gateway. In practice, certain low-priority operations, such as checking the presence of a peripheral unit, etc., are managed by the control unit of the weft feeder instead of being managed by the control unit of the textile machine, so that the exchange of data concerning such low-priority operations only engages the local bus. This circumstance leads to a reduction of the amount of data transmitted via the main bus, with a consequent reduction of the risk of overloading the main bus.

However, a drawback of the system described in WO 2003002800 is that the intensification of the operations performed by the control unit of the yarn feeder, which must be capable of controlling all the peripheral units connected thereto, requires a more sophisticated control software. This leads to a reduction of reliability in relation to possible malfunctions due to software bugs. Another drawback is that all the control units of the feeders must be provided with memories having high storage capacities, in order to be capable of containing said control sowtware, with a consequent rise in costs.

Furthermore, although the above described system leads to a reduction of the traffic of data on the main bus, however the mirror bus is still subject to the risk of overload, particularly when there are a lot of feeders and peripheral units connected thereto. In fact, the mirror bus is engaged not only by the data from the textile machine to the weft feeders and to the peripheral units, and vice versa, but also by the signals which do not concern the feeding apparatus, e.g., the data exchanged between the textile machine and the other, above-cited external devices, which do not concern the feeding apparatus.

Another well-known drawback derives from the circumstance that the manufacturers of weft feeders use communication protocols which are usually different from one another and are incompatible with the communication protocol in use in the network of a general manufacturer of textile machines. In the attempt of overcoming this drawback, WO 2004003670 proposes providing the data transmission system with a serial code generator which is connected to each of the weft feeders via a respective dedicated line and generates a serial code containing the information concerning either the specific textile machine or the protocol in use in the network. With the system described in WO 2004003670, the control units of the weft feeders are each provided with a memory having all the communication protocols used by the various manufacturers of textile machines stored therein, so that the correct protocol is loaded from time to time on the basis of the signal received from the serial code generator.

However, the system described in WO 2004003670 has drawbacks in relation both to the need of periodically updating the communication software of all the weft feeders, with consequent intensification of the mainteinance operations, and to the rise in costs due to the need of providing the yarn feeders with high-capacity memories capable of containing all the possible communication protocols in use in the field.

US 2006/0041630 discloses a gateway having an input/output scanner and including a local area network interface, a serial interface, and a processor configured to provide protocol conversion between the local area network interface and the serial interface. An input/output scanner module is operatively connected to the serial interface and configured to poll the slave device.

Now, it is a main object of the present invention to provide a data transmission system which is generally more reliable and less expensive than the known systems, and which allows both a simplified code to be used for governing the control units of the single feeders, and a higher number of feeders and peripheral units to be connected with respect to the known devices, without overloading the bus.

The above object and other aims and advantages, which will better appear below, are achieved by the data transmission system having the features recited in claim 1, while the dependent claims state other advantageous, though secondary, features of the invention.

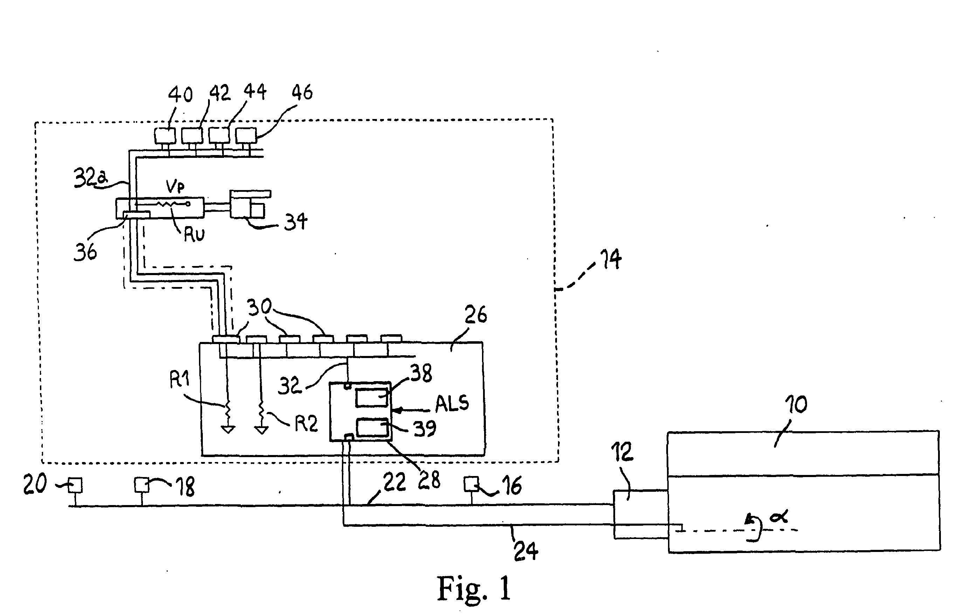

The invention will be now described in more detail with reference to a preferred, non-exclusive embodiment, shown by way of non limiting example in Fig. 1, where a block diagram of the data transmission system according to the invention is illustrated for connecting a yarn-feeding apparatus to a textile machine.

With reference to Fig. 1, a textile machine 10 is provided with a main control unit 12 for bidirectionally exchanging data with a yarn-feeding apparatus 14 and with general external devices 16, 18, 20, via a main bus 22, on the basis of an application layer protocol used by the textile machine. External devices 16, 18, 20 shoul be understood as general devices concerning the weaving process, such as yarn tension control devices, photoelectric weft sensors, and the like. A secondary bus 24 sends an angular position information a from the main control unit 12 of the textile machine to the yarn-feeding apparatus 14.

Yarn-feeding apparatus 14 comprises an interface 26 which incorporates a gateway 28 to which both the main bus 22 and the secondary bus 24 are connected. Interface 26 is provided with a plurality of ports 30 interconnected by a branched field bus 32, to each of which ports a respective yam feeder 34 having a local control unit 36 is connectable (for simplicity, only one yam feeder 34 is shown in Fig. 1 connected to interface 26). Field bus 32 uses an application layer field protocol which is common to all the feeders and is connected to gateway 28 for exchanging data with main bus 22 and with secondary bus 24.

In order to allow data to be exchanged between field bus 32 and main bus 22, which buses generally use different application layers, gateway 28 is provided with a memory 38 containing various application layers used by the various manufacturers of textile machines, so that it loads the correct application layer (i.e., the application layer in use on the main bus) on the basis of a signal ALS which can be selected by the user, e.g., by means of a control panel (not shown). Moreover, the gateway incorporates a complex logic circuit 39, such as a PLD, a FPGA, or a microcontroller, which is programmed for decoding the data conveyed via main bus 22 on the basis of the application layer of the textile machine, and for recodifying them according to the application layer in use on field bus 32, and vice versa. Consequently, the control units of the respective feeders must only know the application layer in use on field bus 32, because the informations are decoded by gateway 28. Of course, this circumstance leads to a minimization of the storage capacity of the control units of the feeders and to a considerable simplification of the software that drives said control units. Moreover, the complex logic circuits of the above type are substantially capable of decoding the data in real time (about 1-2 microseconds), so that the data transmission rate is not affected

Gateway 28 is also programmed for filtering the input data in both the directions (i.e., from main bus 22 to field bus 32, and vice versa), so that only the messages whose addressee is relevant will be decoded. In particular, in relation to the data conveyed via main bus 22, the gateway allows only the informations going to the yarn feeders and their respective peripheral units to pass (i.e., it excludes the data going to external devices 16,18,20), while in relation to the data conveyed via field bus 32, the gateway allows only the data going to main control unit 12 to pass. Accordingly, this leads to a considerable reduction of the load of data conveyed via field bus 32, with consequent reduction of the risk of overload on field bus 32, and with the further advantage that the remaining band can be used for accessory functions relating to the peripheral units, such as monitoring, synchronization, and the like. Furthermore, the reduction of the load of data on field bus 32 allows the latter to be used for conveying the angular position information a (which information, as mentioned above, is required in real time) from textile machine 10 to the various ports 30. Of course, this embodiment is more compact and less expensive than the conventional embodiments cited in the disclosure of the prior art, where the bus that conveys the angular position information bypasses the repeater and communicates with the various ports 30 via a respective, branched bus portion. Moreover, gateway 28 allows the data transmission rates of the two buses to be independent from each other, with consequent further reduction of the amount of data on the field bus.

Yam feeders 34 are each connected for exchanging data with respective peripheral units 40, 42, 44, 46 via an extension 328 of field bus 32 The peripheral units should be understood as accessory devices associated to the single feeders, such as electronic weft brakes, yarn-recovering devices, sensors for controlling the delivered yarn, and the like.

Extension 32a also sends the information concerning the angular position of the textile machine to the peripheral units. However, with the data transmission system described herein, all the operations concerning the control of the peripheral units are directly managed by the control unit of textile machine 12. This is possible because, with respect to the prior art, field bus 32 is much less loaded of data, thanks to the filtering adion performed by the gateway, as mentioned above.

In Fig. 1 an advantageous system is shown for assigning a node address to each of the weft feeders 34 depending on the port 30 to which it is connected. To this purpose, the ports each have a resistance R1, R2, R3, ..., Rn assigned thereto, which is connected to the earth. A pull-up resistance Ru having a fixed value is incorporated in local control unit 36 of yarn feeder 34, so that the voltage Vp across the resistance varies depending on the resistance R1, R2, R3, ..., Rn that is associated to the port. An analog/digital converter (not shown) changes the voltage value Vp into a digital value. Local control unit 36 is programmed for calculating the resistance value associated to the specific port on the basis of this digital value. As shown in Fig. 1, the signal corresponding to voltage Vp is also sent to the peripheral units, which are provided with respective control units (not shown) which are also programmed for processing such voltage signal in order to calculate the port to which the yam feeder is connected.

Preferably, the feeders and the peripheral units each have a different address associated thereto. For example, the feeders have a node number in the range 1 to 16, the peripheral units of a type A have a node number in the range 17 to 32, the peripheral units of a type B have a node number in the range 33 to 48, etc.. Consequently, a peripheral unit of the type B, which learns that it is connected to the port 2 from the signal corresponding to Vp, will have a node address equal to 32 + 2 = 34. Allocating a specific address to each unit makes this system very modular because it allows each of the units connected to field bus 32 (gateway, feeder, or peripheral unit) to set a peer-to-peer connection with any other connected unit.

Preferably, all the above-mentioned buses are of the CAN type, although other types of high speed buses could be used.

A preferred embodiment of the invention has been described herein, but of course many changes may be made by the person skilled in the art within the scope of the claims. For example, the above described system for allocating an address to each one of the feeders, which system is based on using resistances having different values associated to each single port, should be understood as preferred but non-exclusive.

## Claims

1. A data transmission system for connecting a yarn-feeding apparatus (14) to a textile machine (10), comprising an interface (26) which is connected for bidirectionally exchanging data with said textile machine (10) via a main bus (22) using a first application layer protocol, and is provided with a plurality of ports (30) interconnected via a field bus (32), to each of which ports a respective yarn feeder (34) is connectable, said interface (26) incorporating a gateway (28) provided with a memory (38) having a plurality of selectable application layer protocols stored therein which are usable on the main bus (22), and with a complex logic circuit (39) programmed for decoding the data conveyed via said main bus (22) according to said first protocol and recodifying them according to a second protocol for delivery to the field bus (32), and vice versa, **characterized in that** said gateway (28) is operatively connected to receive a position information (α) from the textile machine via a secondary bus (24) and to send said position information (α) to the ports (30) via said field bus (32).

2. The system of claim 1, **characterized in that** said gateway (28) is programmed for filtering the input data from the main bus (22) to the field bus (32), and vice versa, whereby, in relation to the data conveyed via the main bus (22), the gateway (28) allows only the data going to the yarn-feeding apparatus (14) to pass, while, in relation to the informations conveyed via the field bus (32), the gateway (28) allows only the data going to the main control unit (12) to pass.

3. The system of claim 1 or 2, wherein each of said yam feeders (34) is connected for exchanging data with respective peripheral units (40, 42, 44, 46) via an extension (32a) of said field bus, **characterized in that** said extension (32a) also sends said angular position information (α) to the peripheral units.

4. The system of any of claims 1 to 3, **characterized in that** said ports (30) each have a resistance (R1, R2, R3, ..., Rn) associated thereto and connected to the earth, and the local control unit (36) of the yarn feeder (34) has a pull-up resistance (Ru) integrated therein, whereby the voltage (Vp) across the resistance varies as a function of the resistance (R1, R2, R3, ..., Rn) associated to the specific port, said voltage (Vp) thereby forming an univocal address for the respective yarn feeder (34) connected to the respective port (30).

5. The system of claim 4, **characterized in that** the value of said voltage (Vp) is also sent to the peripheral units associated to the feeder.

6. The system of any of claims 1 to 5, **characterized in that** said complex logic circuit is a PLD.

7. The system of any of claims 1 to 5, **characterized in that** said complex logic circuit is a FPGA.

## Patentansprüche

1. Datenübertragungssystem zum Verbinden einer Garnzuführungsvorrichtung (14) mit einer Textilmaschine (10), mit einer Schnittstelle (26), die zum bidirektionalen Datenaustausch über einen Hauptbus (22) unter Verwendung eines ersten Anwendungsschichtprotokolls mit der Textilmaschine (10) verbunden ist, und die mit einer Mehrzahl von über einen Feldbus (32) miteinander verbundenen Anschlüssen (30) versehen ist, wobei an jeden der Anschlüsse ein zugehöriger Garnzuführer (34) anschließbar ist und wobei die Schnittstelle (26) ein Gateway (28) beinhaltet, das mit einem Speicher (38) mit einer darin gespeicherten Mehrzahl auswählbarer Anwendungsschichtprotokolle, die auf dem Hauptbus (22) verwendbar sind, und mit einem komplexen Logikschaltkreis (39) versehen ist, der zum Dekodieren der über den Hauptbus (22) geleiteten Daten gemäß dem ersten Protokoll und Rekodieren derselben gemäß einem zweiten Protokoll zum Zuführen an den Feldbus (32) und umgekehrt programmiert ist,
**dadurch gekennzeichnet, dass** das Gateway (28) betriebsfähig angeschlossen ist, um eine Positionsinformation (*α*) von der Textilmaschine über einen zweiten Bus (24) zu empfangen und die Positionsinformation (*α*) über den Feldbus (32) an die Anschlüsse (30) zu senden.

2. System nach Anspruch 1,
**dadurch gekennzeichnet, dass** das Gateway (28) zum Filtern der Eingangsdaten von dem Hauptbus (22) zu dem Feldbus (32) und umgekehrt programmiert ist, wodurch bezüglich der über den Hauptbus (22) geleiteten Daten das Gateway (28) nur die Daten passieren lässt, die zur Garnzuführungsvorrichtung laufen, während bezüglich der über den Feldbus (32) geleiteten Informationen das Gateway (28) nur die zu der Hauptsteuereinheit (12) laufenden Daten passieren lässt.

3. System nach Anspruch 1 oder 2, bei dem jeder Garnzuführer (34) zum Datenaustausch mit zugehörigen peripheren Einheiten (40, 42, 44, 46) über eine Erweiterung (32a) des Feldbusses verbunden ist,
**dadurch gekennzeichnet, dass** die Erweiterung (32a) außerdem die Winkelpositionsinformation (α) an die peripheren Einheiten sendet.

4. System nach einem der Ansprüche 1 bis 3,
**dadurch gekennzeichnet, dass** die Anschlüsse (30) je einen zugehörigen und mit Masse verbundenen Widerstand (R1, R2, R3, ..., Rn) besitzen, und die lokale Steuereinheit (36) des Garnzuführers (34) einen darin integrierten Pull-up Widerstand (Ru) umfasst, wodurch die Spannung (Vp) über den Widerstand als eine Funktion des dem spezifischen Anschluss zugehörigen Widerstands (R1, R2, R3, ..., Rn) variiert, wobei die Spannung (Vp) somit ein univokale Adresse für den betreffenden Garnzuführer (34) bildet, der mit dem zugehörigen Anschluss (30) verbunden ist.

5. System nach Anspruch 4,
**dadurch gekennzeichnet, dass** der Wert der Spannung (Vp) auch an die dem Zuführer zugehörigen peripheren Einheiten gesendet wird.

6. System nach einem der Ansprüche 1 bis 5,
**dadurch gekennzeichnet, dass** der komplexe Logikschaltkreis ein PLD ist.

7. System nach einem der Ansprüche 1 bis 5,
**dadurch gekennzeichnet, dass** der komplexe Logikschaltkreis ein FPGA ist.

## Revendications

1. Système de transmission de données qui relie un appareil (14) d'alimentation en fil à une machine textile (10), qui comprend une interface (26) qui est raccordée de manière à permettre un échange bidirectionnel de données avec ladite machine textile (10) via un bus principal (22) qui utilise un premier protocole de couche d'application et qui est dotée de plusieurs ports (30) interconnectés par un bus de terrain (32), chacun de ces ports pouvant être raccordé à un dévideur de fil (34) respectif, ladite interface (26) incorporant une porte (28) dotée d'une mémoire (38) dans laquelle sont conservés plusieurs protocoles de couche d'application sélectionnables qui peuvent être utilisés sur le bus principal (22), avec un circuit logique complexe (39) programmé pour décoder les données transmises par l'intermédiaire dudit bus principal (22) selon ledit premier protocole et les recodant selon un deuxième protocole pour les délivrer au bus de terrain (32) et vice versa, **caractérisé en ce qu'**en fonctionnement, ladite porte (28) est raccordée de manière à recevoir de la machine textile une information de position par (a) l'intermédiaire d'un bus secondaire (24) et à envoyer ladite information de position (a)aux ports (30) par l'intermédiaire dudit bus de terrain (32).

2. Système selon la revendication 1, **caractérisé en ce que** ladite porte (28) est programmée pour filtrer les données d'entrée provenant du bus principal (22) et allant vers le bus de terrain (32) et vice versa, grâce à quoi, pour les données transmises par l'intermédiaire du bus principal (22), la porte (28) permet uniquement le passage des données allant vers l'appareil (14) d'alimentation en fil, alors que pour les informations transmises par le bus de terrain (32), la porte (28) permet uniquement le passage des données allant vers l'unité de contrôle principal (12).

3. Système selon la revendication 1 ou 2, dans lequel chacun desdits dévideurs de fil (34) est raccordé de manière à échanger des données avec des unités périphériques respectives (40, 42, 44, 46) par l'intermédiaire d'une extension (32a) dudit bus de terrain, **caractérisé en ce que** ladite extension (32a) envoie aussi ladite information de position angulaire (a) aux unités périphériques.

4. Système selon l'une quelconque des revendications 1 à 3, **caractérisé en ce qu'**une résistance respective (R1, R2, R3, ..., Rn) est associée à chacun desdits ports (30) qui sont également raccordés à la terre, l'unité de contrôle local (36) du dévideur de fil (34) présentant une résistance de rappel (Ru) intégrée, la tension électrique (Vp) aux bornes de la résistance variant en fonction de la résistance (R1, R2, R3, ..., Rn) associée au port spécifique, ladite tension électrique (Vp) formant ainsi une adresse univoque pour le dévideur de fil (34) relié au port (30) respectif.

5. Système selon la revendication 4, **caractérisé en ce que** la valeur de ladite tension électrique (Vp) est aussi envoyée aux unités périphériques associées au dévideur.

6. Système selon l'une quelconque des revendications 1 à 5, **caractérisé en ce que** ledit circuit logique complexe est un PLD.

7. Système selon l'une quelconque des revendications 1 à 5, **caractérisé en ce que** ledit circuit logique complexe est un FPGA.
